# EUROPÄISCHE PATENTSCHRIFT

(11) **EP 2 269 434 B1**
(45) Veröffentlichungstag und Bekanntmachung des Hinweises auf die Patenterteilung: **19.09.2012**
(21) Anmeldenummer: 10006665.3
(22) Anmeldetag: 28.06.2010
(51) Int. Cl.: A01C 7/08

(54) **Verteiler für pneumatische Drillmaschine**
Distributor for pneumatic drill machines
Distributeur pour un semoir pneumatique

(30) Priorität: 30.06.2009 DE 102009031066
(43) Veröffentlichungstag der Anmeldung: 05.01.2011
(73) Patentinhaber: Lemken GmbH & Co. KG, 46519 Alpen (DE)
(72) Erfinder: Gebbeken, Martin, Dipl.-Ing., 46519 Alpen (DE); Werries, Dieter, 46519 Alpen (DE); Paeßens, Christian, 47661 Issum (DE); Lukas, Thomas, 48683 Ahaus-Wüllen (DE); Berendsen, Mark, 7044 AJ Lengel (NL)
(74) Vertreter: Schulte & Schulte

(56) Entgegenhaltungen:
- EP-A2- 0 803 177
- DE-A1- 10 210 010
- DE-C1- 4 411 240
- NL-A- 8 801 011
- US-A1- 2009 078 178

## Beschreibung

Die Erfindung betrifft einen Verteiler für pneumatische Drillmaschine zum Ausbringen von Saatgut und auch Dünger gemäß dem Oberbegriff des Patentanspruchs 1.

Bekannt sind Verteiler für pneumatische Drillmaschinen, bei denen beim Anlegen von Fahrgassen einfach die entsprechenden Ausgänge eines Verteilers abgesperrt werden. Dadurch wird den verbliebenen freien Ausgängen des Verteilers und damit auch den zugehörigen Säscharen mehr Saatgut zugeführt als gewünscht. Durch das Verschließen von Ausgängen werden auch die Strömungsverhältnisse im Verteiler so verschlechtert, dass die verbliebenen Säschare nicht mehr mit der gleichen Menge Saatgut versorgt werden können. Eine angepasste Einstellung der Dosiervorrichtung kann zwar die Ausbringmenge im gewünschten Rahmen bringen; die ungleiche Verteilung des Saatgutes auf die verbliebenen Säschare kann wegen der ungünstigen Strömungsverhältnisse jedoch dadurch nicht verbessert werden.

Dem deutschen Patent DE 197 45 098 C2 sind Verteiler für pneumatische Drillmaschinen zu entnehmen, bei denen beim Anlegen von Fahrgassen die entsprechenden Ausgänge der Verteiler nicht abgesperrt werden, sondern das Saatgut einfach umgeleitet und in den Vorratstank zurück geführt wird. Dies hat zwar den Vorteil, dass die Dosiervorrichtung hinsichtlich der Ausbringmenge nicht mehr angepasst werden muss, aber der technische Aufwand einer derartigen Rückführung des Saatgutes ist sehr hoch. In der europäischen Patentschrift EP 0 752 203 B1 Ist ein Verteiler für pneumatische Drillmaschinen gezeigt, bei dem jedes ausgewählte Säschar zumindest theoretisch über den Verteiler mit der gleichen Menge Saatgut versorgt wird, auch dann, wenn Fahrgassen angelegt werden. Beim Anlegen von Fahrgassen werden keine Ausgänge abgesperrt und auch kein Saatgut in den Vorratstank zurückgeführt, sondern das Saatgut wird in die Zuführleitung des Verteilers umgeleitet und so erneut dem Verteiler zugeführt. Die ausgebrachte dosierte Saatgutmenge wird dann so angepasst, dass die verbliebenen ausgewählten Säschare wieder mit der gleichen Saatgutmenge versorgt werden wie zuvor. Diese theoretische Verteilgenauigkeit wird jedoch in der Praxis nicht erreicht, obwohl sich die Strömungsverhältnisse im Verteiler nur geringfügig ändern. In der Zuleitung zum Verteiler wird das Saatgut in der Regel so verwirbelt, dass es im Luftstrom gleichmäßig verteilt den Verteiler erreicht. Dies ist Voraussetzung dafür, dass ein Verteiler eine gute Verteilarbeit leisten kann. Durch das kurz vor dem Verteiler in den Verteiler rückgeführte Saatgut wird der angestrebte Effekt der gleichmäßigen Verteilung des Saatgutes im Luftstrom zum Verteiler nur unzureichend erreicht. Dies hat zur Folge, dass während des Anlegens von Fahrgassen keine gleichmäßige Verteilung des Saatgutes auf die ausgewählten Säschare erzielt wird. Wird, wie es bei dem zuvor angesprochenen Stand der Technik in allen Fällen ist, keine gleichmäßige Verteilung des Saatgutes auf die einzelnen Säschare erreicht, führt dies mehr oder weniger zu Qualitäts- und auch Ertragseinbußen. Die deutsche Offenlegungsschrift DE 102 10 010 A1 hat einen Verteiler mit den Merkmalen des Oberbegriffes des Anspruchs 1 zum Gegenstand, der ein Leitteil aufweist, das in den Luftstrom eingeführt wird, wenn Fahrgassen angelegt werden sollen, Das Leitteil wird wieder aus dem Bereich des Luftstroms entfernt, wenn keine Fahrgassen angelegt werden sollen. Alle Saatgutausläufe des Verteilers werden dann wieder mit Saatgut versorgt. Im Fall des Anlegens von Fahrgassen verdeckt das Leitblech mehr oder weniger gut die Saatgutausläufe des Verteilers, die sich im Windschatten des Luftstroms befinden. Alleine die Luftverwirbelungen sind Ursache dafür, dass Saatgut auch in die Saatgutausläufe für die Säschare gelangt, die nicht mit Saatgut versorgt werden sollen. Ein noch größerer Nachteil ist der, dass wegen der Verwirbelungen im Verteiler und der schlechten Aufteilung des Saatgutes auf die einzelnen Saatgutausläufe das Saatgut letztendlich ungleichmäßig den Säscharen zugeführt wird. In Zeiten, wo neben einer guten Längsverteilung eine gute Querverteilung zwingend erforderlich ist, um optimale Bedingungen für das Auflaufen des Saatgutes und den Pflanzenbestand zu schaffen, ist ein derartiger Verteiler nicht mehr zeitgemäß.

Die Erfindung hat demzufolge die Aufgabe, einen einfach aufgebauten Verteiler für pneumatische Drillmaschinen zu schaffen, mit dem auch beim Anlegen von Fahrgassen eine optimale und gleichmäßige Verteilung des Saatgutes auf alle ausgewählten Säschare erreicht wird.

Die Aufgabe der Erfindung wird nach einer ersten Variante der Erfindung durch die Merkmale des kennzeichnenden Teiles des Patentanspruches 1 gelöst.

Dadurch dass der Verteiler ein bewegliches Verteilsegment aufweist, das in die jeweils erforderliche Verteilstellung bringbar ist, entstehen keine üblichen Verteilungenauigkeiten. Das Verteilsegment wird in die entsprechende Verteilstellung gebracht und sorgt so dafür, dass in allen Arbeitssituationen alle Säschare mit der gleichen Saatgutmenge versorgt werden. Das Saatgut wird in den Verteiler geleitet, auf alle ausgewählten Ausgänge verteilt und über die Saatgufileitungen direkt den Säscharen zugeführt. Es werden keine zusätzlichen Leitungen, Bypässe oder Rückführungen außerhalb des Verteilers benötigt.

Eine besonders gute Verteilung kann erreicht werden, wenn das bewegliche Verteilsegment aus einem Ringkörper besteht, der mindestens zwei Verteilebenen mit Durchgangsöffnungen aufweist, eine erste Verteilebene und eine zweite Verteilebene, wobei die Durchgangsöffnungen in jeder der beiden Verteilebenen im Eintrittsbereich des Saatgutes gleichmäßig verteilt angeordnet sind und zwar derart, dass die Durchgangsöffnungen in jeder Verteilebene zueinander den gleichen Abstand aufweisen und die Anzahl der Durchgangsöffnungen der zweiten Verteilebene um die Anzahl der Saatgutausläufe bzw. Säschare, die für das Anlegen der Fahrgassen nicht mit Saatgut versorgt werden, geringer ist als die Anzahl der Durchgangsöffnungen der ersten Verteilebene. Der Ringkörper weist zwei Verteilebenen mit Durchgangsöffnungen auf, die in der jeweiligen Position des Verteilsegmentes entweder mit allen am Verteiler angeschlossenen Saatgutleitungen in Verbindung stehen oder nur mit den Saatgutleitungen, die nur beim Anlegen von Fahrgassen mit Saatgut versorgt werden sollen. Jede Verteilebene ist absolut symmetrisch. Das Verteilsegment als Ringkörper auszubilden, hat unter anderem den Vorteil, dass ein Ringkörper einfach herzustellen ist und z.B. in einem zylindrischen Verteilergehäuse einfach wie ein Kolben in die jeweilige Stellung oder Verteilebene verschoben werden kann. In einem Ringkörper können auch die Durchgangsöffnungen einfach vorgesehen und gleichmäßig verteilt werden, so dass im Verteiler gleiche Verhältnisse für jede Durchgangsöffnung und somit für jede Saatgutleitung und jedes Säschar geschaffen sind, um alle Säschare in jeder Arbeitssituation mit der gleichen Menge Saatgut versorgen zu können.

Eine Variante für diese Ringkörper sieht vor, dass der Ringkörper geteilt ist und aus zwei Ringelementen besteht, wobei dem ersten Ringelement die Durchgangsöffnungen der ersten Verteilebene zugeordnet sind und die Durchgangsöffnungen der zweiten Verteilebene dem zweiten Ringelement.

Die Ausführung mit zwei Ringelementen hat den Vorteil, dass nur ein Ringelement bzw. nur ein Teil des Ringkörpers ausgetauscht werden muss, wenn eine breitere oder schmalere Fahrgasse angelegt werden soll oder wenn eine andere Spurbreite berücksichtigt werden muss. Die Durchgangsöffnungen können in einem Ringelement sehr einfach und kostengünstig gleichmäßig verteilt angeordnet werden. Innerhalb der Wandung des Ringkörpers kann der Verlauf der Durchgangsöffnungen so gestaltet werden, dass das Saatgut immer zu den Ausgängen des Verteilers bzw. Saatgutleitungen geführt wird, die jeweils mit Saatgut versorgt werden sollen.

Dass der Ringkörper aus mehr als zwei Ringelementen besteht, sieht wiederum eine Variante hierzu vor, bei der jedes Ringelement einer Verteilebene zugeordnet ist und jeweils eine unterschiedliche Anzahl von Durchgangsöffnungen oder eine andere Position der Eintrittsbereiche der Durchgangsöffnungen aufweist.

Durch das Vorsehen einer Vielzahl von Ringelementen oder Verteilebenen kann der Verteiler auf unterschiedliche Fahrgassenbreiten oder Spurbreiten ohne Montagearbeit eingestellt werden. Wenn pro Fahrgassenreihe anstatt zwei drei Säreihen abgeschaltet werden sollen, wird der Verteiler so eingestellt, dass das passende Ringelement zum Einsatz kommt. Auch bei größeren oder kleineren Spurbreiten der Fahrgassenspur wird einfach der dafür geeignete Ringkörper in Verteilposition gebracht.

Nach einer weiteren Variante ist vorgesehen, dass der Ringkörper im Verteiler in unterschiedliche Stellungen verdrehbar umsetzbar und/oder fixierbar und damit so ausgebildet ist, dass für unterschiedlich Spurbreiten und dafür angepasste Fahrgassen die entsprechenden Saatgutausläufe des Verteilers nicht mit Saatgut versorgt werden. Durch das verdrehte Umsetzen des Ringkörpers können für das Anlegen von Fahrgassen die Anforderungen für unterschiedliche Spurbreiten in einfacher Weise erfüllt werden. Die Durchgangsöffnungen kommen dann nur mit den Saatgutausläufen zur Deckung, die beim Anlegen von Fahrgassen mit Saatgut versorgt werden sollen.

Die Erfindung sieht weiter vor, dass das bewegliche Verteilelement über eine automatische Stellvorrichtung verstellbar ausgebildet ist, wobei die automatische Stellvorrichtung vorzugsweise über einen Jobrechner, Controller oder eine elektronische Steuerung als Gerätemanagementsystem aktiviert wird.

Über das Gerätemanagement wird so das Verteilsegment immer in die jeweils erforderliche Verteilstellung bewegt, entweder in die zweite Verteilebene, die für das Anlegen für Fahrgassen relevant ist, oder in die erste Verteilebene, in der keine Fahrgassen angelegt werden sollen.

Mehrere denkbare Vorschläge für die Energieversorgung sehen vor, dass die automatische Stellvorrichtung beispielsweise hydraulisch, elektrisch, mechanisch, pneumatisch, elektromagnetisch oder elektrohydraulisch betätigbar ausgebildet ist. Je nach vorhandener Energiequelle des Traktors oder der Drillmaschine kann so eine automatische Betätigung der Stellvorrichtung bewirkt werden.

Die Erfindung sieht weiter vor, dass das Gerätemanagementsystem zum positionsgenauen Managen von Schalt- und Stellvorgängen Mittel aufweist, die zur Ermittlung der aktuellen Standortposition der pneumatischen Drillmaschine auf dem Acker ausgebildet sind. Ein automatischer Ablauf der Schaltvorgänge ist nur dann sichergestellt, wenn das Gerätemanagement erkennt, an welcher Stelle sich die pneumatische Drillmaschine gerade befindet. So wird der Verteiler mit Verteilsegment immer so geschaltet, dass sich das Verteilsegment automatisch in die Verteilstellung bewegt, die für die nächste Überfahrt auf dem Acker gefordert ist. Auch andere Stellvorgänge können so positionsgenau dem Stand der Technik entsprechend durchgeführt werden.

Eine gute Anpassung an bestehende Systeme kann erreicht werden, wenn die pneumatische Drillmaschine Bestandteil einer angebauten, angehängten oder selbstfahrenden Drillmaschine oder Bestellkombination ist. Die erfinderische Verteilertechnik kann so in Verbindung mit allen vorhandenen Säsystemen eingesetzt werden.

Weiterhin ist vorgesehen, dass der Ringkörper Durchgangsöffnungen aufweist, die unterschiedliche Durchmesser und Abstände zueinander aufweisen, um so Sonderanforderungen der Saatgutausbringung und Anlegung von Fahrgassen erfüllen zu können. Z. B. in Fällen großer Erosionsprobleme kann eine etwas unregelmäßigere Art der Saatgutausbringung von Vorteil sein, um so die Erosionsprobleme zu reduzieren.

Weitere Einzelheiten der Erfindung sind den Figuren und der Figurenbeschreibung zu entnehmen. Es zeigen:
Figur 1 den Verteiler in perspektivischer Darstellung,
Figur 2 eine Systemskizze von Verteiler und Säschar,
Figur 3 eine Explosionsdarstellung des Verteilers,
Figur 4 den Ringkörper der ersten Ebene,
Figur 5 den Ringkörper der zweiten Ebene,
Figur 6 den Verteiler im Schnitt in "Komplettsästellung" und
Figur 7 den Verteiler im Schnitt in "Fahrgassenstellung"

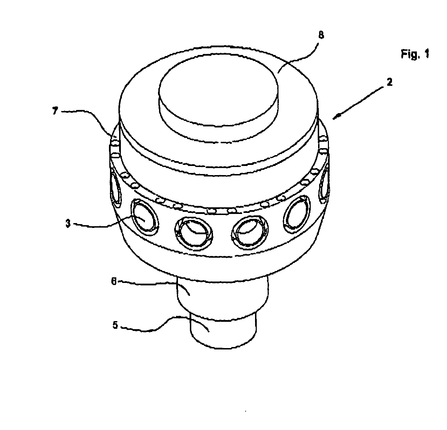

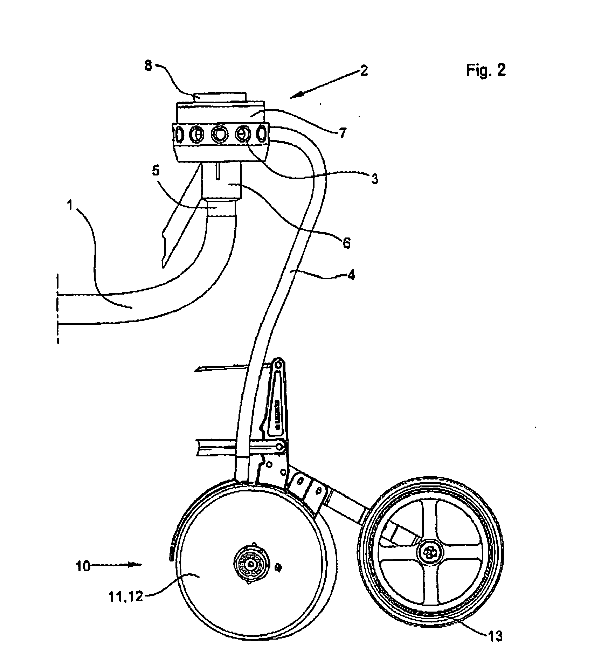

Figur 1 zeigt den Verteiler 2 in perspektivischer Darstellung. Der Verteiler 2 ist als runder Körper ausgebildet, der ein Verteilergehäuse 7 aufweist, an dem sich im Umfang verteilt die Ausgänge 3 befinden. An den Ausgängen 3 sind die Saatgutleitungen 4 angeschlossen, was insbesondere der Figur 2 zu entnehmen ist. Unten am Verteiler 2 befindet sich der Anschluss 5 für die Zuführleitung, über die der Verteiler mit Saatgut versorgt wird. Über das Wirbelrohr 6 wird das Saatgut im Verteiler 2 so verwirbelt, dass es im Luftstrom gut verteilt wird und so alle Ausgänge 3 mit der gleichen Menge Saatgut versorgt werden.

Bei Figur 2 handelt es sich um eine Systemskizze von Verteiler 2 und Säschar 11. Diese Systemskizze verdeutlicht, wie das Saatgut über die Zuführleitung 1, dem Wirbelrohr 6, zum Verteiler 2 gelangt. Über die Ausgänge 3 des Verteilers 2 gelangt das Saatgut jeweils über die Saatgutleitung 4 zu dem Saatgutauslauf 10 bzw. dem Säschar 11. Das Säschar 11 ist hier als Doppelscheibenschar 12 ausgebildet, das in der Tiefe über die Tiefenführungsrolle 13 geführt wird.

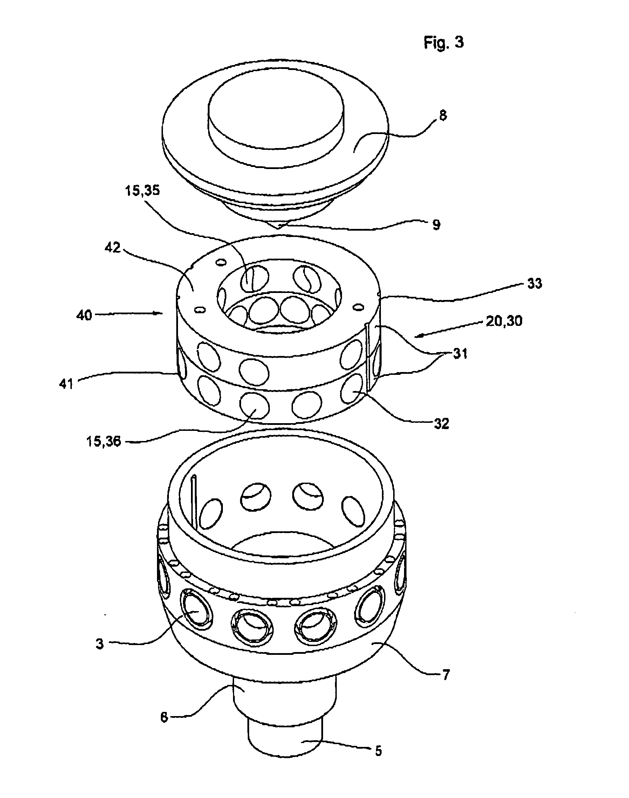

Figur 3 zeigt eine Explosionsdarstellung des Verteilers 2. Unterhalb des Verteilergehäuses 7 des Verteilers 2 befindet sich das Wirbelrohr 6 mit dem Anschluss 5 und der Zuführleitung 1. Im Verteiler 2 befindet sich das Verteilsegment 20, das als Ringkörper 30 ausgebildet ist, mit Ringelementen 40. In diesem Fall sind zwei Ringelemente 40 vorgesehen, ein erstes Ringelement 41 und ein zweites Ringelement 42. Das erste Ringelement 41 weist zwölf Austrittsbereiche 36 auf, das zweite Ringelement 42 nur acht Austrittsbereiche 36. Die Austrittsbereiche 36 stehen jeweils direkt mit einem Ausgang 3 und damit über eine Saatgutleitung 4 mit einem Säschar 11 in Verbindung. Alle Saatgutausläufe 10 bzw. Säschare 11 der pneumatischen Drillmaschine bzw. einer Teilbreite der pneumatischen Drillmaschine sind über Saatgutleitungen 4 mit den Ausgängen 3 des Verteilers 2 verbunden. Das Verteilsegment 20 kann je nach dem, ob alle Säschare 11 mit Saatgut versorgt werden sollen oder nur die Säschare 11, die nur während des Anlegens von Fahrgassen mit Saatgut versorgt werden sollen, in die entsprechende Verteilstellung verschoben werden. Der Ringkörper 30 weist zwei Verteilebenen 31 auf, eine erste Verteilebene 32 und eine zweite Verteilebene 33. Jede Verteilebene 31 des Ringkörpers 30 wird durch Ringelemente 40 gebildet, ein erstes Ringelement 41 und ein zweites Ringelement 42. Die Ringelemente 40 weisen Durchgangsöffnungen 15 auf, die im Eintrittsbereich 35 über den Innenkreis der Ringelemente 40 gleichmäßig verteilt angeordnet sind, die aber im Austrittsbereich 36 so angeordnet sind, dass sie mit den Ausgängen 3 des Verteilers 2 präzise zur Deckung kommen. Durch eine nicht dargestellte Stellvorrichtung wird das Verteilsegment 20 jeweils in die gewünschte Verteilstellung geschoben. Entweder wird die erste Verteilebene 32 in die Verteilstellung 25 oder die zweite Verteilebene 33 gebracht. Wenn alle Säschare 11 mit Saatgut versorgt werden sollen, wird das Verteilsegment 20 so verschoben, dass sich die erste Verteilebene 32 des Ringkörpers 30 und damit alle Austrittsbereiche 36 des ersten Ringelementes 41 in Deckung befinden mit allen Ausgängen 3 des Verteilers 2. Damit befindet sich das erste Ringelement 41 in der Verteilstellung 25. Das zweite Ringelement 42 befindet sich dann in der inaktiven Stellung 26. Wenn Fahrgassen angelegt werden sollen, wird über die Stellvorrichtung das Verteilsegment 20 so verschoben, dass sich dann die zweite Verteilebene 33 des Ringkörpers 30 in der Verteilstellung 25 befindet. Nur die Austrittsbereiche 36 der Durchgangsöffnungen 15 befinden sich jetzt in Deckung mit den Ausgängen 3 des Verteilers 2, die während des Anlegens von Fahrgassen mit Saatgut versorgt werden sollen. Das Ringelement 40, in diesem Fall das zweite Ringelement 42, besitzt in diesem Fall nur acht Durchgangsöffnungen 15. Während des Anlegens von Fahrgassen werden in diesem Fall vier Säschare 11 nicht mit Saatgut versorgt.

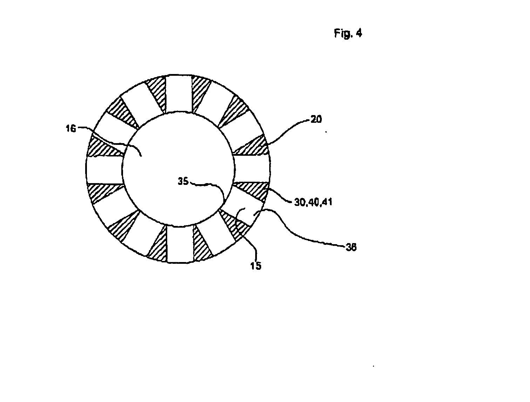

Gegenstand von Figur 4 ist ein Ringelement 40, in diesem Fall das erste Ringelement 41 des Ringkörpers 30, das zu dem Verteilsegment 20 gehört. Figur 4 verdeutlicht auch die Anordnung der Durchgangsöffnungen 15, die den Eintrittsbereich 35 des entsprechenden Ringelementes 40 und den Austrittsbereich 36 verbinden. Im Innenbereich 16 des Ringelementes 40 sind die Eintrittsbereiche 35 der Durchgangsöffnungen 15 gleichmäßig verteilt angeordnet. Das in den Verteiler 2 einströmende Saatgut wird so gleichmäßig auf alle Durchgangsöffnungen 15 verteilt.

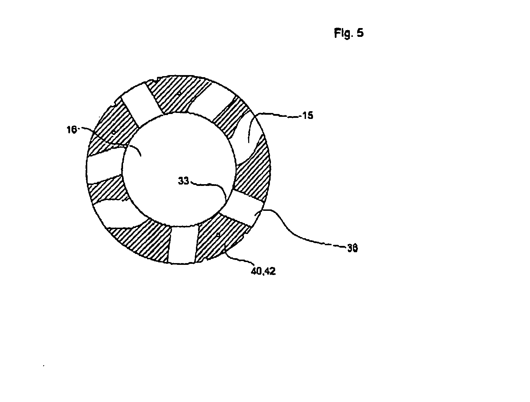

In Figur 5 ist ein anderes Ringelement 40 dargestellt, in diesem Fall das zweite Ringelement 42. Im Gegensatz zum ersten Ringelement 41 weist das zweite Ringelement 42 weniger Durchgangsöffnungen 15 auf. Der Austrittsbereich 36 des zweiten Ringelementes 42 steht mit den Ausgängen 3 des Verteilers in Verbindung, die mit den Saatgutleitungen 4 in Verbindung stehen, durch die während des Anlegens von Fahrgassen Saatgut geleitet werden soll. Die Ausgänge 3 des Verteilers 2, die mit den Säscharen 11 in Verbindung stehen, die nicht mit Saatgut versorgt werden, stehen mit keiner Durchgangsöffnung 15 in Verbindung. Damit während des Anlegens von Fahrgassen jedes Säschar 11 mit der gleichen Menge Saatgut versorgt wird, sind im Innenbereich 16 des zweiten Ringelementes 42 die Eintrittsbereiche 35 der Durchgangsöffnungen 15 gleichmäßig verteilt angeordnet. Je nach Breite der Fahrgasse werden mehr oder weniger Säschare 11 nicht mit Saatgut versorgt. In abweichenden Fällen wird ein angepasstes zweites Ringelement 42 im Verteiler montiert, das dann z.B. nur 6 oder 10 Durchgangsöffnungen 15 aufweist. Im Fall einer anderen Spurbreite werden die Durchgangsöffnungen 15 im Ringelement 42 so angeordnet, dass die im Innenbereich 16 gleichmäßig verteilt angeordneten Eintrittsbereiche 35 mit den Austrittsbereichen 36, den Ausgängen 3 und den Saatgutleitungen 4 in Verbindung stehen, über die das Saatgut zu den Säscharen 11 geleitet wird, die beim Anlegen von Fahrgassen mit Saatgut versorgt werden sollen.

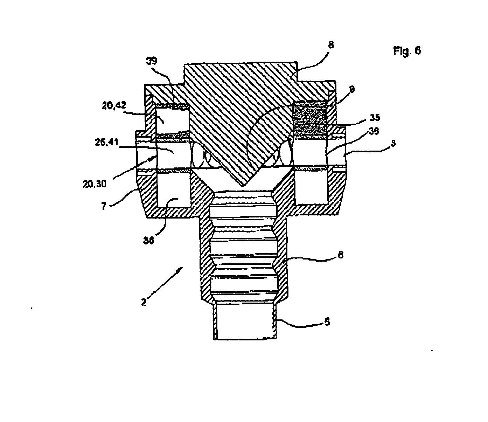

Figur 6 zeigt den Verteiler 2 im Schnitt, und zwar mit dem ersten Ringelement 41 in Verteilstellung 25. Alle Säschare 11, die am Verteiler 2 angeschlossen sind, werden mit Saatgut versorgt. Das zweite Ringelement 42 befindet sich in der inaktiven Stellung 26. Dafür wurde das Verteilsegment 20 bzw. der Ringkörper 30 so verschoben, dass sich das zweite Ringelement 42 im oberen Ringraum 39 des Verteilergehäuses 7 befindet. Der untere Ringraum 38 im Verteilergehäuse dient dazu, das erste Ringelement 41 aufzunehmen, wenn sich dieses Ringelement 41 in der inaktiven Stellung 26 befinden soll. Die Figur 6 verdeutlicht auch den Aufbau des Verteilers 2 mit dem Wirbelrohr 6 und dem Deckel 8 mit Kegel 9.

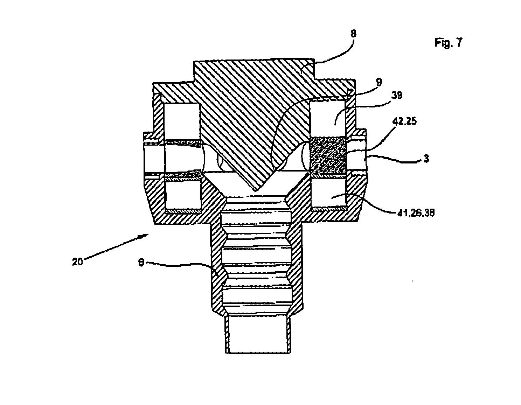

Figur 7 zeigt ebenfalls den Verteiler 2 im Schnitt, und zwar mit dem zweiten Ringelement 42 in Verteilstellung 25. Jetzt werden nur die Säschare 11 mit Saatgut versorgt, die beim Anlegen von Fahrgassen mit Saatgut versorgt werden sollen. Das erste Ringelement 41 befindet sich jetzt in der inaktiven Stellung 26 im unteren Ringraum 38.

## Patentansprüche

1. Verteiler (2) für pneumatische Drillmaschine zum Verteilen von Saatgut, das aus dem Vorratstank mit einer Dosiereinrichtung über eine Zuführleitung (1) zu dem Verteiler (2) gefördert wird, wobei an dem Verteiler (2) mehrere Ausgänge (3) vorgesehen sind, an die Saatgutleitungen (4) abgeschossen sind, über die das Saatgut zu Saatgutausläufen (10) oder zu Säscharen (11) geführt wird, wobei einzelne Saatgutausläufe (10) oder Säschare (11) nicht mit Saatgut versorgt werden, wenn bei einer Überfahrt Fahrgassen angelegt werden, wobei im Verteiler (2) ein bewegliches Verteilsegment (20) vorgesehen ist, das in mehrere Verteilstellungen bewegbar ist, in eine erste Verteilstellung für die Versorgung aller Saatgutausläufe (10) oder Säschare (11) mit Saatgut und in eine zweite Verteilstellung, in der für das Anlegen von Fahrgassen ausgewählte Saatgutausläufe (10) oder Säschare (11) nicht mit Saatgut versorgt werden, wobei das bewegliche Verteilsegment (20) aus einem Ringkörper (30) besteht,
**dadurch gekennzeichnet,**
**dass**, der Ringkörper mindestens zwei Verteilebenen (31) mit Durchgangsöffnungen (15) aufweist, eine erste Verteilebene (32) und eine zweite Verteilebene (33), wobei die Durchgangsöffnungen (15) in jeder der beiden Verteilebenen (31) im Eintrittsbereich (35) des Saatgutes gleichmaßig verteilt angeordnet sind und zwar derart, dass die Durchgangsöffnungen (15) in jeder Verteilebene (32,33) zueinander den gleichen Abstand aufweisen und die Anzahl der Durchgangsöffnungen (15) der zweiten Verteilebene (33) um die Anzahl der Saatgutausläufe (10) bzw. Säschare (11), die für das Anlegen der Fahrgassen nicht mit Saatgut versorgt werden, geringer ist als die Anzahl der Durchgangsöffnungen (15) der ersten Verteilebene (32).

2. Verteiler nach Anspruch 1,
**dadurch gekennzeichnet,**
**dass** der Ringkörper (30) geteilt ist und aus zwei Ringelementen (40) besteht, wobei dem ersten Ringelement (41) die Durchgangsöffnungen (15) der ersten Verteilebene (32) und dem zweiten Ringelement (42) die Durchgangsöffnungen (15) der zweiten Verteilebene (33) zugeordnet sind.

3. Verteiler 9 nach Anspruch 2,
**dadurch gekennzeichnet,**
**dass** der Ringkörper (30) aus mehr als zwei Ringelementen (40) besteht, wobei jedes Ringelement (40) einer Verteilebene (31) zugeordnet ist und jeweils eine unterschiedliche Anzahl von Durchgangsöffnungen (15) oder eine andere Position der Eintrittsbereiche (35) der Durchgangsöffnungen (15) aufweist.

4. Verteiler Anspruch 3,
**dadurch gekennzeichnet,**
**dass** der Ringkörper (30) im Verteiler (2) in unterschiedliche Stellungen verdreht umsetzbar und/oder fixierbar ausgebildet ist.

5. Verteiler nach Anspruch 1,
**dadurch gekennzeichnet,**
**dass** das bewegliche Verteilelement (20) über eine automatische Stellvorrichtung verstellbar ausgebildet ist, wobei die automatische Stellvorrichtung vorzugsweise über einen Jobrechner, Controller oder eine elektronische Steuerung als Gerätemanagementsystem aktiviert wird.

6. Verteiler nach Anspruch 5,
**dadurch gekennzeichnet,**
**dass** die automatische Stellvorrichtung beispielsweise hydraulisch, elektrisch, mechanisch, pneumatisch, elektromagnetisch oder elektrohydraulisch betätigbar ausgebildet ist.

7. Verteiler nach Anspruch 1,
**dadurch gekennzeichnet,**
**dass** der Ringkörper (30) Durchgangsöffnungen (15) aufweist, die unterschiedliche Durchmesser und Abstände zueinander aufweisen.

8. Pneumatische Drillmaschine not einem Verteiler nach Anspruch 1,
**dadurch gekennzeichnet,**
**dass** das Gerätemanagementsystem zum positionsgenauen Managen von Schalt-und Stellvorgängen Mittel aufweist, die zur Ermittlung der aktuellen Standortposition der pneumatischen Drillmaschine auf dem Acker ausgebildet sind.

9. Pneumatische Drillmaschine mit einem Verteiler nach Anspruch 1,
**dadurch gekennzeichnet,**
**dass** die pneumatische Drillmaschine Bestandteil einer angebauten, angehängten oder selbstfahrenden Drillmaschine oder Bestellkombination ist.

## Claims

1. A distributor (2) for a pneumatic drill for distribution of seeds which are conveyed out of the storage tank by means of a metering device over a feed line (1) to the distributor (2), wherein there are several outlets (3) provided on the distributor (2) to which seeds lines (4) are connected and via which the seeds are fed to seeds outlets (10) or to seed coulters (11), wherein individual seeds outlets (10) or seed coulters (11) are not supplied with seeds if, when passing over the land, driving lanes are created, wherein there is a movable distribution segment (20) provided in the distributor (2) which can be moved into several distribution positions, in a first distribution position for supplying all seeds outlets (10) or seed coulters (11) with seed and in a second distribution position, in which the seeds outlets (10) or seed coulters (11) selected for creating driving lanes are not supplied with seeds, wherein the movable distribution segment (20) consists of an annular body (30)
**characterized**
**in that** the annular body has at least two distribution levels (31) with through-holes (15), a first distribution level (32) and a second distribution level (33), wherein the through-holes (15) are distributed evenly in each of the two distribution levels (31) in the inlet area (35) of the seeds in such a way that the through-holes (15) have the same spacing between them in each of the distribution levels (32, 33) and the number of through-holes (15) of the second distribution level (33) is less than the number of through-holes (15) of the first distribution level (32) by the number of the seeds outlets (10) or seed coulters (11) which are not supplied with seeds for creating the driving lanes.

2. The distributor according to Claim 1,
**characterized**
**in that** the annular body (30) is split and consists of two ring elements (40), wherein the through-holes (15) of the first distribution level (32) are assigned to the first ring element (41) and the through-holes (15) of the second distribution level (33) are assigned to the second ring element (42).

3. The distributor according to Claim 2,
**characterized**
**in that** the annular body (30) consists of more than two ring elements (40), wherein every ring element (40) is assigned to a distribution level (31) and respectively has a different number of through-holes (15) or a different position of the entry areas (35) of the through-holes (15).

4. The distributor according to Claim 3,
**characterized**
**in that** the annular body (30) in the distributor (2) is designed such that it can be moved in the turned state to and/or fixed in different positions.

5. The distributor according to Claim 1,
**characterized**
**in that** the movable distribution element (20) is designed to be adjustable through an automatic adjusting device, wherein the automatic adjusting device is preferably activated via a job computer, controller or an electronic control system acting as a devices management system.

6. The distributor according to Claim 5,
**characterized**
**in that** the automatic adjusting device is, for example, actuatable hydraulically, electrically, mechanically, pneumatically, electromagnetically or electrohydraulically.

7. The distributor according to Claim 1,
**characterized**
**in that** the annular body (30) has through-holes (15) which have different diameters and are at different distances to each other.

8. A pneumatic drill with a distributor according to Claim 1,
**characterized**
**in that** the devices management system is fitted with means to allow management of exact positioning of switching and adjusting processes, which are designed for exact determination of the current location of the pneumatic drill on the field.

9. A pneumatic drill with a distributor according to Claim 1,
**characterized**
**in that** the pneumatic drill is an integral part of an attached, hooked on or self-propelled drill or cultivation combination.

## Revendications

1. Distributeur (2) pour machine à semer pneumatique destiné à la distribution de semence extraite du réservoir avec un équipement de dosage par l'intermédiaire d'une conduite d'alimentation (1) et transportée au distributeur (2), étant donné que sont prévues sur le distributeur (2) une pluralité de sorties (3) auxquelles sont raccordées les conduites de semence (4) par l'intermédiaire desquelles la semence est conduite à des sorties de semence (10) ou à des socs de semoir (11), étant donné que des sorties de semence (10) ou socs de semoir (11) individuels ne sont pas alimentés en semence lorsque des allées de circulation sont créées au cours d'une traversée, étant donné qu'est prévu dans le distributeur (2) un segment de distribution mobile (20) qui peut être déplacé à plusieurs positions de distribution, soit une première position de distribution pour l'alimentation en semence de toutes les sorties de semence (10) ou tous les socs de semoir (11) et une deuxième position de distribution dans laquelle des sorties de semence (10) ou socs de semoir (11) sélectionnés pour la création d'allées de circulation ne sont pas alimentés en semence, étant donné que le segment de distribution mobile (20) se compose d'un corps annulaire (30),
**caractérisé**
**en ce que** le corps annulaire présente au moins deux niveaux de distribution (31) avec des orifices de passage (15), à savoir un premier niveau de distribution (32) et un deuxième niveau de distribution (33), étant donné que les orifices de passage (15) sont répartis uniformément à chacun des deux niveaux de distribution (31) dans la zone d'entrée (35), et ce de manière à ce que les orifices de passage (15) présentent à chaque niveau de distribution (32, 33) le même écartement l'un par rapport à l'autre et le nombre d'orifices de passage (15) du deuxième niveau de distribution (33) soit inférieur du nombre de sorties de semence (10) ou de socs de semoir (11), qui ne sont pas alimentés pour la création des allées de déplacement, au nombre d'orifices de passage (15) du premier niveau de distribution (32).

2. Distributeur selon la revendication 1,
**caractérisé**
**en ce que** le corps annulaire (30) est divisé et se compose de deux éléments annulaires (40), étant donné que sont affectés au premier élément annulaire (41) les orifices de passage (15) du premier niveau de distribution (32) et au deuxième élément annulaire (42) les orifices de passage (15) du deuxième niveau de distribution (33).

3. Distributeur selon la revendication 2,
**caractérisé**
**en ce que** le corps annulaire (30) se compose de plus de deux éléments annulaires (40), étant donné que chaque élément annulaire (40) est affecté à un niveau de distribution (31) et présente respectivement un nombre différent d'orifices de passage (15) ou une autre position des zones d'entrée (35) des orifices de passage (15).

4. Distributeur selon la revendication 3,
**caractérisé**
**en ce que** le corps annulaire (30) est formé de manière à pouvoir être déplacé à l'état tourné et/ou fixé dans le distributeur (2) à différentes positions.

5. Distributeur selon la revendication 1,
**caractérisé**
**en ce que** l'élément de distribution mobile (20) peut être ajusté par l'intermédiaire d'un dispositif de réglage automatique, étant donné que le dispositif de réglage automatique est de préférence activé par un calculateur de tâches, un contrôleur ou une commande électronique comme système de gestion d'appareils.

6. Distributeur selon la revendication 5,
**caractérisé**
**en ce que** le dispositif d'ajustage automatique peut être actionné par exemple hydrauliquement, électriquement, mécaniquement, pneumatiquement, électromagnétiquement ou électrohydrauliquement.

7. Distributeur selon la revendication 1,
**caractérisé**
**en ce que** le corps annulaire (30) présente des orifices de passage (15) qui présentent des diamètres et écartements l'un par rapport à l'autre différents.

8. Machine à semer pneumatique avec un distributeur selon la revendication 1,
**caractérisée**
**en ce que** le système de gestion d'appareils présente pour la gestion de position exacte des opérations de commutation et de réglage des moyens qui sont formés de manière à déterminer la position actuelle de la machine à semer pneumatique sur le champ.

9. Machine à semer pneumatique avec un distributeur selon la revendication 1,
**caractérisée**
**en ce que** la machine à semer pneumatique est partie intégrante d'une machine à semer rapportée, remorquée ou automotrice ou d'une combinaison de labourage.
